Europäisches Patentamt

European Patent Office

Office européen des brevets

(19)

(11) Numéro de publication: **0 123 570**

**A1**

(12) # DEMANDE DE BREVET EUROPEEN

(21) Numéro de dépôt: **84400471.3**

(22) Date de dépôt: **09.03.84**

(51) Int. Cl.³: **C 05 F 9/02**

(30) Priorité: **11.03.83 FR 8304262**

(43) Date de publication de la demande:
**31.10.84 Bulletin 84/44**

(84) Etats contractants désignés:
**AT BE CH DE GB IT LI LU NL SE**

(71) Demandeur: S.A. "UNION TECHNIQUE ELF GENERALE DE CHAUFFE - UTEC"
23, rue Lavoisier Zone Industrielle
F-69682 Chassieu(FR)

(72) Inventeur: Carlini, René
10, Chemin des Bruyères
F-69130 Ecully(FR)

(72) Inventeur: Giroud, Gérard
Résidence La Boissière 31, avenue Paul Santy
F-69130 Ecully(FR)

(74) Mandataire: Ecrepont, Robert
Cabinet LEMOINE 12, Boulevard de la Liberté
F-59800 Lille(FR)

(54) Perfectionnement à la fabrication d'amendement organique et produits obtenus.

(57) Le procédé de l'invention est caractérisé par le fait:

a) que le dosage, le mélange et le pressage se font en continu,

b) que l'humidité relative des matières compostées est détectée en permanence pour agir sur le dosage continu relatif des additifs et du compost,

c) que les granulés sont immédiatement séchés en continu avant le conditionnement.

L'installation se compose de trémies d'alimentation (1, 4) avec des dispositifs de dosage en continu (6), d'une mélangeuse (8), de presse de filage continu (10), d'un séchoir continu (12) et d'une installation de stockage et de conditionnement (18, 19, 20).

Application à l'amendement des sols.

EP 0 123 570 A1

./...

Fig.1

## Domaine technique

La présente invention concerne un perfectionnement au procédé de fabrication d'amendement organique et, en général, d'engrais organo-minéraux sous forme de granulés cylindriques fabriqués à partir de matières compostées, notamment à base d'ordures ménagères, ledit procédé consistant

- en un dosage des additifs, d'une part, et du compost, d'autre part, pour ensuite mélanger ces éléments,

- en un pressage du mélange produisant des joncs cylindriques qui sont tronçonnés pour obtenir des granulés.

L'invention concerne aussi les installations permettant la fabrication des amendements organiques suivant le procédé précédemment évoqué. Elle concerne encore l'amendement qui est obtenu par ce procédé.

## Problème posé

Il s'agit, d'un côté, de fabriquer des engrais efficaces et, d'un autre côté, de trouver un usage aux produits résiduels des ordures ménagères avec lesquels on fabrique des composts.

## Etat de la technique et inconvénients

Actuellement, on fabrique des amendements organiques à partir des composts obtenus avec les ordures ménagères, débarrassées de leurs éléments métalliques et du verre, auquel on ajoute des additifs appropriés. Cette fabrication s'obtient par dosage et mélange et se fait par cuvée, c'est-à-dire que l'on marche de façon discontinue, ce qui nécessite des appareils de mélange très volumineux avec des risques de prise en masse, d'où une énergie dépensée considérable pour maintenir la masse en mouvement. Pour réaliser un dosage correct, on doit prendre en compte l'humidité relative de la matière compostée. A cet effet, on effectue une mesure d'humidité relative sur un échantillon et on considère que l'humidité relative de la matière première est la même pour toute la cuvée, ce qui fausse le résultat final quant au dosage.

Le produit granulé n'est pratiquement jamais séché, ce qui conduit à un redémarrage de la fermentation du produit fini, ce qui exige un épandage rapide. Il en résulte une impossibilité de stockage prolongé et une obligation de production instantanée très importante.

On a essayé d'y remédier en séchant le produit mélangé avant la fabrication des granulés. Ceci conduit à l'obtention d'un granulé très compact qui se délite très mal ou pas du tout une fois répandu sur le terrain récepteur.

La présente invention est destinée à remédier à ces inconvénients.

Exposé de l'invention

Le procédé de l'invention est caractérisé par le fait :

a) que le dosage, le mélange et le pressage se font en continu,

b) que l'humidité relative des matières compostées est détectée en permanence pour agir sur le dosage continu relatif des additifs et du compost,

c) que les granulés sont immédiatement séchés en continu avant le conditionnement.

L'installation permettant d'appliquer ce procédé est caractérisée par la combinaison :

a) de trémies d'alimentation avec dispositif de dosage en continu,

- d'une part, des additifs,

- d'autre part, du compost,

b) d'une mélangeuse alimentée en continu par les dispositifs de dosage,

c) de presses de filage continues de joncs et d'une tronçonneuse fabriquant des granulés,

d) d'un séchoir continu de granulé,

e) d'une installation de stockage et de conditionnement des granulés.

Suivant un mode préféré de réalisation, les dispositifs de dosage en continu comportent une combinaison de bascules automatiques et de sonde d'humidité relative du compost qui interagissent, pour obtenir le dosage optimum en fonction des données émises par ces appareils de mesure sur les débits d'additifs et de compost.

L'amendement de l'invention est caractérisé par des granulés,

a) d'une taille de 5 à 6 mm environ

b) d'un taux d'humidité inférieur à 15 %

c) d'une teneur en matière organique, sur produit sec, de 45 à 55 % environ,

d) d'un taux d'azote organique sur produit sec supérieur à 1,

e) d'un Ph compris entre 7 et 7,8.

**Solution au problème, avantages et résultats industriels**

Les remarques suivantes peuvent être faites :

1 - sur le procédé de dosage et mélange :

- il se fait en continu, ce qui permet d'obtenir les mêmes productions que par cuvées mais avec du matériel beaucoup moins volumineux, donc moins onéreux, et avec une occupation des sols très faible ;

- on obtient une faible dépense d'énergie, car il n'y a pas de grosse masse de produit à maintenir en mouvement pour éviter la prise en masse.

2 - Sur la prise en compte de l'humidité relative de la matière première compostée :

Une sonde mesure l'humidité relative du compost et délivre cette information à la bascule électronique qui corrige en conséquence le signal donné aux différents doseurs d'additifs, d'où une prise en compte pratiquement en temps réel de l'humidité relative matière première et un dosage plus précis.

3 - Sur le séchage :

Le produit fini doit pouvoir se déliter facilement dans les sols récepteurs.

Le fait de fabriquer les granulés avant séchage permet d'obtenir ce résultat. En effet :

le granulé formé à partir du mélange humide contient une quantité importante d'eau (35 à 50 %) pendant l'opération de séchage, l'eau à l'intérieur du granulé va migrer vers la périphérie, s'évaporer et laisser la place à un mini réseau d'air ramifié à l'intérieur du granulé.

Ce granulé sec ne repartira donc pas en fermentation une fois stocké et, de plus, aura facilement tendance à se déliter dans le sol récepteur par son avidité et sa facilité (canaux déjà formés) à absorber l'eau contenue dans les sols.

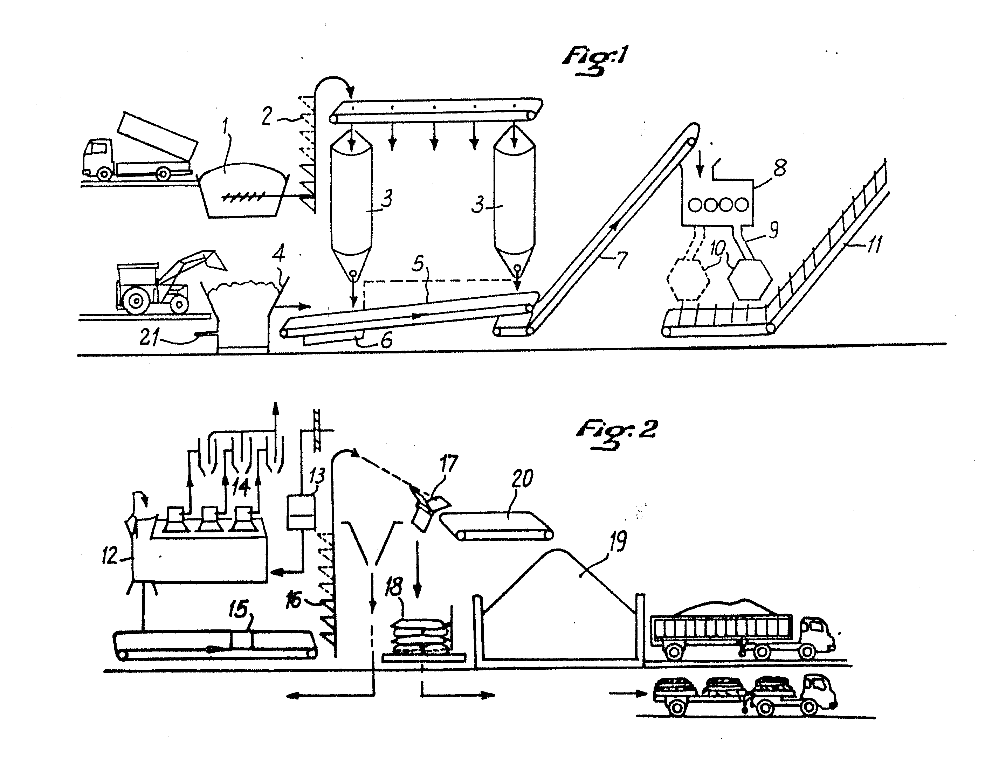

L'invention sera mieux comprise à l'aide de la description ci-après qui en donne un exemple non limitatif de réalisation pratique et qui est illustré par les dessins joints dans lesquels les figures 1 et 2 représentent schématiquement les deux parties de l'installation de l'invention.

Description d'un mode de réalisation

L'installation se décompose en un circuit des additifs et un circuit.

L'installation se décompose en un circuit des additifs et un circuit des amendements.

Le circuit des additifs :

les additifs pulvérulents sont déposés dans la trémie (1). Une vis d'Archimède dépose le produit dans un élévateur à godets (2) et un répartiteur alimente les cellules appropriées (3).

Le circuit amendement :

le compost affiné débarrassé du verre et des matières plastiques, est déposé dans la trémie (4), une vis d'extraction dépose le produit sur une bande (5), une bascule électronique (6) asservit les doseurs d'additifs en fonction de la masse de compost décomptée , de la formulation choisie et de l'humidité relative détectée par la sonde (21).

L'ensemble compost et additifs dosés est déposé sur la bande (7) qui alimente une mélangeuse (8) ayant pour but d'homogénéiser le produit. Un couloir vibrant (9) amène l'amendement dans la presse à granulés (10), une bande à tasseaux (11) récupère les bouchons formés et les dépose dans un sécheur refroidisseur (12). Un brûleur (13) alimente en air chaud basse température le sécheur. Une série de cyclones dépoussiéreurs (14) séparent les poussières de la vapeur d'eau rejetée à l'atmosphère. Selon leur quantité les poussières et les fines peuvent être recyclées vers la mélangeuse (8).

Les granulés secs récupérés par la bande (15) alimentent l'élévateur à godets (16). Une boîte à deux directions dirige, selon la demande, les granulés vers l'unité d'enséchage (18) ou vers le stock de vrac (19) alimenté par la bande (20) équipée d'un chariot déverseur.

Le produit fini peut être évacué en vrac par camion benne ou en sacs de 50 Kgs par palette d'une tonne.

REVENDICATIONS

0123570

1. Perfectionnement au procédé de fabrication d'amendement organique et, en général, d'engrais organo-minéraux sous forme de granulés cylindriques fabriqués à partir de matières compostées, notamment à base d'ordures ménagères, ledit procédé, consistant

- en un dosage des additifs, d'une part, et du compost, d'autre part pour ensuite mélanger ces éléments,

- en un pressage du mélange produisant des joncs cylindriques qui sont tronçonnés pour obtenir les granulés, c a r a c t é r i s é par le fait :

a) que le dosage, le mélange et le pressage se font en continu,

b) que l'humidité relative des matières compostées est détectée en permanence pour agir sur le dosage continu relatif des additifs et du compost

c) que les granulés sont immédiatement séchés en continu avant le conditionnnement

2. Installation de fabrication d'amendement suivant le procédé défini dans la revendication 1, c a r a c t é r i s é par la combinaison :

a) de trémie d'alimentation (1, 4) avec dispositifs de dosage en continu (6),

- d'une part, des additifs,

- d'autre part, du compost

b) d'une mélangeuse (8) alimentée en continu par les dispositifs de dosage (1, 2, 3, 4, 5, 6),

c) de presses de filage continues (10) de joncs et d'une tronçonneuse fabriquant des granulés ;

d) d'un séchoir continu (12) de granulés

e) d'une installation de stockage et de conditionnement (18, 19, 20) des granulés.

3. Installation, telle que définie dans la revendication 2, c a r a c t é r i s é e par le fait que les dispositifs de dosage en continu comportent une combinaison de bascules automatiques (6) et de sonde d'humidité relative (21) du compost qui interoissent, pour obtenir le dosage optimum en fonction des données émises par ces appareils de mesure, sur les débits d'additifs et de compost.

4. Amenderent obtenu par le procédé de la revendication 1 et avec l'installation de l'une ou l'autre des revendications 2 ou 3 c a r a c t é r i s é par des granulés

a) d'une taille de 5 à 6 mm environ

b) d'un taux d'humidité relative inférieur à 15 %

c) d'une teneur en matière organique, sur produit sec, de 45 à 55 % environ

d) d'un taux d'azote organique sur produit sec supérieur à 1

e) d'un Ph compris entre 7 et 7,8.

*Fig:1*

*Fig:2*

Office européen
des brevets

**RAPPORT DE RECHERCHE EUROPEENNE**

0123570
Numéro de la demande

EP 84 40 0471

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 293 237 (ECOLOGY PATENT) * Page 6, revendication 1; page 2, lignes 35-40; page 3, lignes 1-10, 19-24 * | 1,2,4 | C 05 F 9/02 |
| A | DE-A-1 592 588 (CHEMISCHE WERKE ALBERT) * Pages 4-5; exemples 1,2 * | 1 | |
| A | DE-A-2 352 474 (INDUSTRIEWERKE KARLSRUHE) * Page 3, dernier paragraphe; page 4, premier paragraphe; page 6, revendications 1,2 * | 1,4 | |
| A | FR-A-1 329 495 (CASPARI & MEYER) * Page 5, revendication 1; page 4, exemple * | 1 | DOMAINES TECHNIQUES RECHERCHES (Int. Cl. 3) |
| A | EP-B-0 035 112 (LINDEMANN MASCHINENFABRIK) | | C 05 F |
| A | DE-A-2 528 347 (GREGOROVIC) | | |

Le présent rapport de recherche a été établi pour toutes les revendications

| Lieu de la recherche | Date d'achèvement de la recherche | Examinateur |
|---|---|---|
| LA HAYE | 26-06-1984 | VERHOEST J.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82